# EUROPEAN PATENT SPECIFICATION

(11) **EP 1 539 411 B1**
(45) Date of publication and mention of the grant of the patent: **18.04.2007**
(21) Application number: 03766094.1
(22) Date of filing: 05.08.2003
(51) Int. Cl.: B22F 9/08, H01M 4/42, H01M 4/24, B22F 1/00

(54) **USE IN ELECTROCHEMICAL CELLS OF A ZINC POWDER**
VERWENDUNG EINES ZINKPULVERS IN ELEKTROCHEMISCHEN ZELLEN
UTILISATION DANS DES CELLULES ELECTROCHIMIQUES D'UNE POUDRE DE ZINC

(30) Priority: 05.08.2002 US 400787 P
(43) Date of publication of application: 15.06.2005
(73) Proprietor: Noranda Inc., Toronto, Ontario, M5J 2T3 (CA)
(72) Inventor: MALSERVISI, Martin, Rigaud, Quebec J0P 1P0 (CA); HUOT, Jean, Yves, St-Hubert, Quebec J3Y 8Y1 (CA)
(74) Representative: Henkel, Feiler & Hänzel
(86) International application number: PCT/CA2003/001170
(87) International publication number: WO 2004/012886

(56) References cited:
- EP-A- 0 427 315
- WO-A-96/06196
- DE-A- 4 329 431
- US-A- 5 609 919
- US-A1- 2001 009 741
- US-B1- 6 344 295

## Description

### FIELD OF THE INVENTION

The present invention relates to a method for fabricating an anode of an electrochemical cell and the use of zinc alloy particles in a method for fabricating such an anode. In particular, the present invention relates to zinc powders which provide enhanced performance in alkaline and zinc-air cells.

### BACKGROUND OF THE INVENTION

Primary alkaline cells are often used in applications where long lasting, high-energy output is needed, such as electronic portable devices and camera flashes. The alkaline cell technology has evolved significantly over the past 10 years or so. For instance, lower mercury and mercury-free cells were introduced in the 90's. Additionally, the high-rate performance of alkaline cells is consistently improving for both manganese dioxide cathodes and zinc anodes.

Secondary, or rechargeable, zinc alkaline cells can also be used in similar applications as well as zinc-air cells. Those negative zinc electrodes are often similar to the zinc anodes of primary alkaline cells.

Alkaline cells typically use, and derive their name from, an aqueous solution of an alkaline electrolyte such as potassium hydroxide. In their initial state these electrolytes are typically in a liquid form and, as the majority of commercially available off-the-shelf alkaline batteries are dry cells having an immobilised electrolyte, a gelling agent is typically added to the electrolyte during fabrication. Common gelling agents include carboxymethylcellulose, polyacrylic acid, sodium polyacrylate and salts. Trace amounts of other additives, such as anti-gassing agents including indium compounds or organics may in some cases be added to the electrolyte to inhibit the evolution of hydrogen gas, an unwanted by-product of the cell self-discharge process associated with the corrosion of the zinc.

A predominant source of anodes, or negative electrodes, for household varieties of alkaline cells is zinc alloy powders mixed with a gelled potassium hydroxide/zinc oxide/water electrolyte. Indeed, zinc has a number of attributes which favour its use in the fabrication of anodes for disposable batteries including: a readily available supply of raw materials; low toxicity and a suitable electro-negativity or position in the galvanic series. Additionally, zinc-alkaline dry-cells typically have a low self discharge rate, good leakage resistance, good low temperature performance, relatively high capacity and relatively high energy density.

Conventionally, the fabrication of battery-grade zinc alloy powder is carried out using the well known processes of gas atomisation or centrifugal atomisation, and as such these technologies are in current use by most zinc powder producers throughout the world. In gas or centrifugal atomisation a melt of zinc alloy is first prepared by melting metallic zinc and adding alloying elements to molten zinc, then atomising the melt and finally classifying the produced powders according to the size of particles produced and desired. In conventional air atomisation, for example, the molten zinc alloy is forced through a narrow nozzle at the output of which jets of air collide with the molten zinc alloy, thereby forming the zinc particles.

Typically, the size distribution of the particles produced by the atomisation process may be controlled to some degree in the gas atomisation process, (i) by adjusting the metal to air ratio and, (ii) by classifying the produced powder, typically using mesh screens or the like, to remove particles which are either too fine or too coarse.

Although the above conventional methods provide a means for fabricating powders from zinc, in order to render an alkaline cell with optimised operating characteristics, the zinc powder must be of high-purity metallic zinc, have precise zinc alloying, and a narrow particle size distribution.

One of the drawbacks of the conventional means of fabrication is that, although the zinc alloy powder produced displays acceptable properties and characteristics and is suitable for use in constructing the anodes of alkaline cells, the wide particle size distribution may require sorting of the particles. Another drawback is that difficulties in modifying and controlling particle shape limits the ability to achieve specific density and particle packing, and consequently to achieve improved alkaline cell performance.

Alternative atomisation technologies have been developed or studied to improve product performance. One of these techniques is impulse atomisation as disclosed in United States Patent No. 5,609,919 issued to Yuan et al, which describes a method and apparatus for producing particles from molten metal, including zinc, by forcing the molten metal through small apertures by applying regular train of impulses to the molten metal in the direction of the apertures and of sufficient amplitude to impel the molten metal through the apertures.

US-A-5 609 919 discloses a method an an apparatus for producing discontinuous streams of an inorganic substance, such as a metal, an alloy, a molten salt, slag or matte, or a slurry of ceramic particles, wherein the substance, in the form of a melt or slurry, is maintained in a container at the bottom of which at least one nozzle is provided containing at least one opening having a thickness that is large enough to withstand mechanical and thermal stresses and the melt or slurry is pushed through such opening(s) by means of an impulse applicator positioned over the opening(s) and operating in a periodic manner.

US-A-6 344 295 disclose rechargeable cells employing mercury-and lead-free zinc-bismuth alloys as negative active materials. Such cells demonstrate low after-cycle gassing, improved cumulative discharge capacities and initial discharge performances comparable to that of rechargeable cells that employ leaded zinc powders as negative anode materials.

### SUMMARY OF THE INVENTION

The present invention actresses the above and other drawbacks by providing for a method for fabricating an anode of an electrochemical cell as claimed in claim 1 and the use of zinc alloy particles in such a method as claimed in claim 7.

### BRIEF DESCRIPTION OF THE DRAWINGS

Figure 1 is a cut-way perspective view of an "AA" (or LR-06) electrochemical cell produced in accordance with an illustrative embodiment of the present invention;
Figure 2 is a schematic diagram of an assembly for fabricating zinc powders according to impulse atomisation;
Figure 3 provides particle size distributions for a variety of zinc powders fabricated using both impulse atomisation and air atomisation;
Figure 4 provides illustrative embodiments of enhanced particle shapes for zinc powders;
Figures 5A through 5D provide an electron microscope images of enhanced particle shapes for zinc powders;
Figure 5E provides a comparative electron microscope image of the particle shapes of zinc powders formed by conventional air atomisation;
Figures 6A through 6C provide an illustrative comparison of aspect ratios between zinc alloy powders formed using impulse atomisation and conventional air atomisation;
Figure 7 provides the discharge curves of LR-06 cells containing zinc strands where 67% of zinc constitute the anode versus LR-06 cells containing 67% conventional zinc powder under 1.0 ohm continuous discharge;
Figure 8 provides the discharge curves of LR-06 cells containing zinc strands where 62% of zinc constitute the anode versus LR-06 cells containing 67% conventional zinc powder under 1.0 ohm continuous discharge;
Figure 9 provides the discharge curves of LR-06 cells containing zinc strands where 67% and 62% of zinc constitute the anode versus LR-06 cells containing 67%, conventional zinc powder under 1 ampere continuous discharge;
Figure 10 provides the discharge curves of LR-06 cells containing zinc strands where 62% of zinc constitute the anode versus LR-06 cells containing 67% conventional zinc powder under 3.9 ohm continuous discharge.
Figure 11 provides the discharge curves of LR-06 cells containing zinc strands where 67% of zinc constitute the anode versus LR-06 cells containing 67% conventional zinc powder under 1.0 ohm continuous discharge.
Figure 12 provides the discharge curves of LR-06 cells containing zinc strands where 67% of zinc constitute the anode versus LR-06 cells containing 67% conventional zinc powder under 1 ampere continuous discharge.

### DETAILED DESCRIPTION OF THE ILLUSTRATIVE EMBODIMENTS

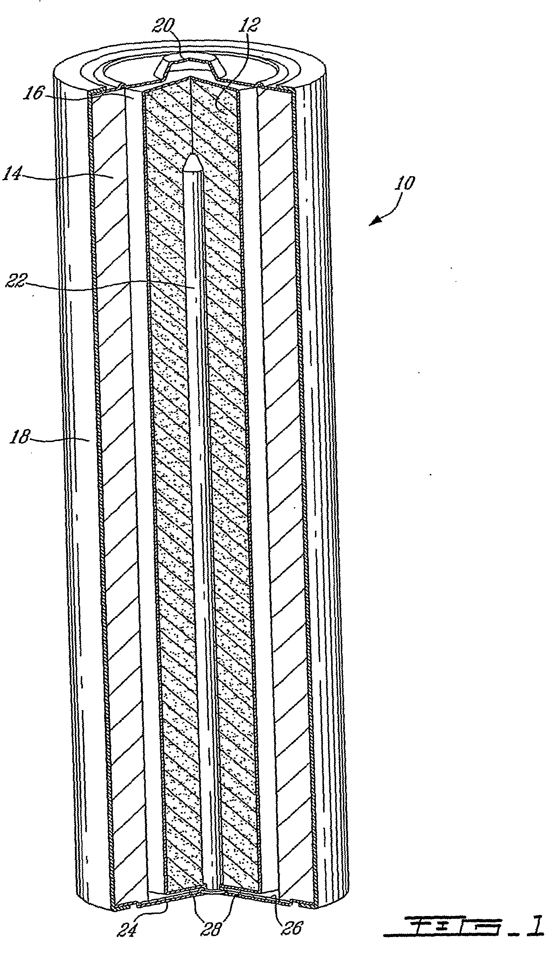

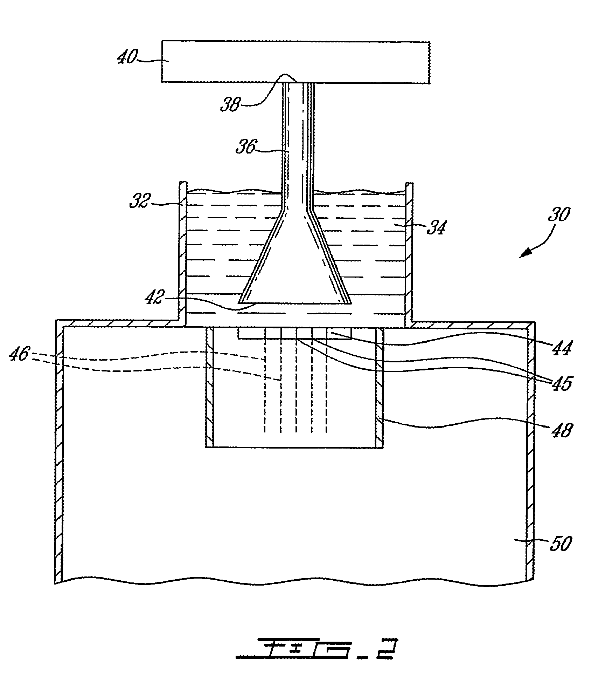

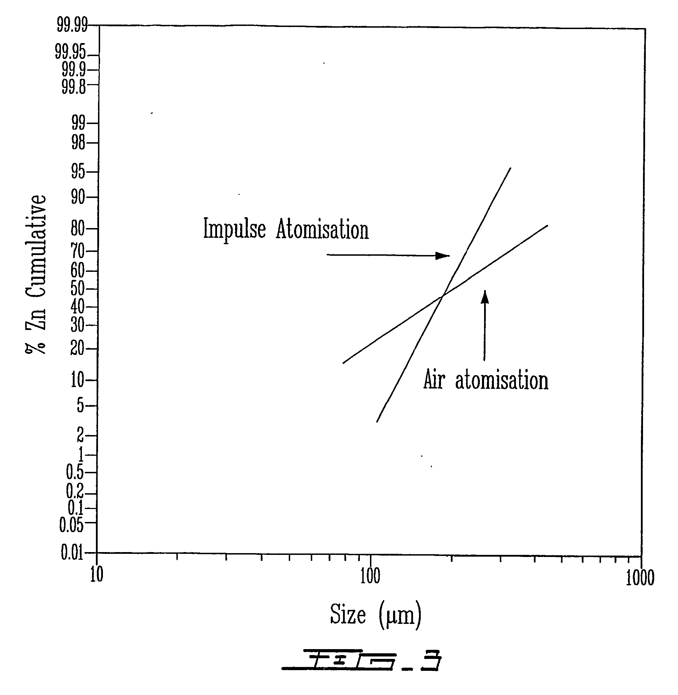

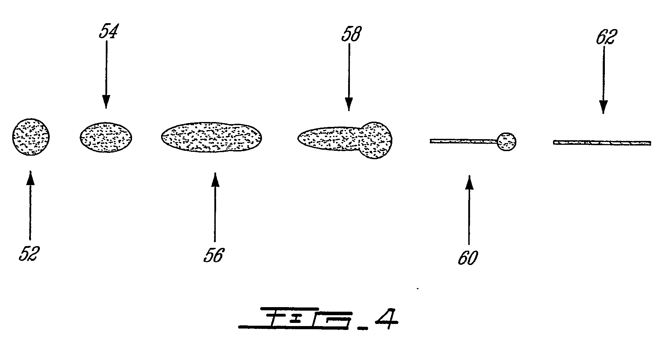

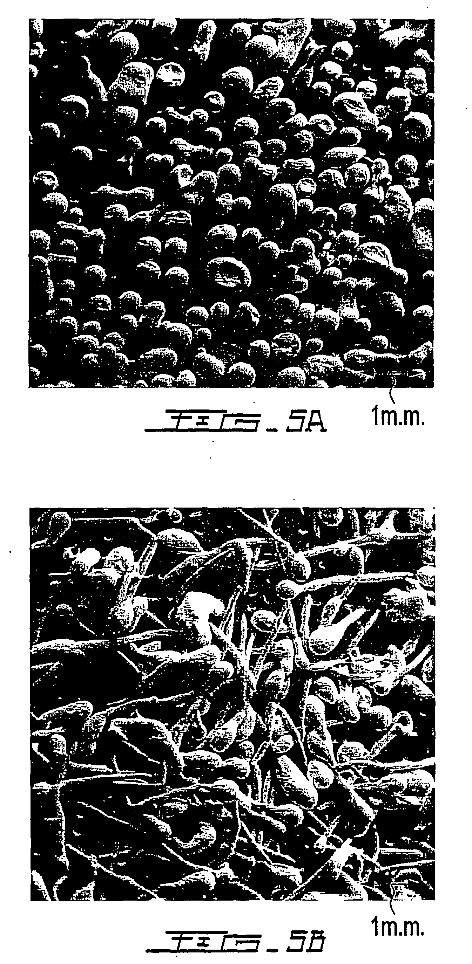

Referring to Figure 1 an illustrative embodiment of an electrochemical cell produced in accordance with an illustrative embodiment of the present invention will now be described. The electrochemical cell, generally referred to using the reference numeral 10, is comprised of a gelled zinc anode 12 separated from a Manganese dioxide cathode 14 by a paper separator 16. A casing 18 typically fabricated from a conductive material such as steel (or PVC with a conductive lining) encases the cathode 14 and acts as the cathode current collector. The casing 18 is in electrical contact with the positive cap 20. An anode current collector 22 fabricated from a highly conductive material such as copper is inserted into the a gelled zinc anode 12 from the end opposite to that of the positive cap 20. The anode current collector 22 is in electrical contact with the negative cap 24. A layer of insulating material 26 separates the cathode 14 and casing 18 from coming into contact with the negative cap 24. Additionally, air vents 28 are provided for to allow any hydrogen gas which may evolve due to the corrosion of zinc to escape. The gelled zinc anode 12 is comprised of zinc alloy powder suspended in a potassium hydroxide (KOH) electrolyte treated with a gelling agent.

As discussed above, impulse atomisation allows the atomisation of zinc and zinc alloys into zinc powders with unique physical characteristics including, for example, the shape of the particles and the particle size distribution. Other unique properties are directly associated with the above characteristics, for example a variety of particle packing and densities varying between 0.5 and 4.6 g/cc can be achieved. Therefore, zinc and zinc alloys powder produced using impulse atomisation lend themselves exceptionally well to the fabrication of anodes and negative electrodes for electrochemical cells.

Use of these powders as a component in the anodes or negative electrodes of electrochemical cells provides zinc electrodes with low gassing rate in alkaline media, and a significant service increase under a variety of operating conditions, notably during high-rate discharge.

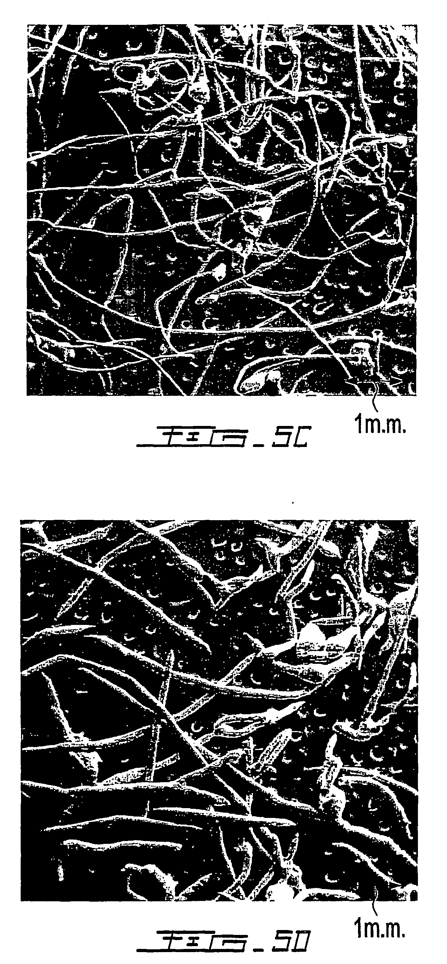

Referring now to Figure 2 there is disclosed an assembly for fabricating zinc powders according to a modified version of impulse atomisation generally referred to using the numeral 30. The assembly comprises a tundish 32 of molten zinc metal 34 into which is placed a plunger 36. The tundish 32 is manufactured from refractory or metal capable of withstanding the temperature of the molten zinc alloy. The upper end 38 of the piston is attached to a source of vibration 40. Application of the vibrations to the plunger 36 causes the lower end 42 of the plunger 36 to move relative to the tundish 32 and an atomising plate 44 attached to the bottom of the tundish 32. The molten zinc metal 34 flows freely between the lower end 42 of the plunger 36 and the atomising plate 44. Movement of the lower end 42 of the plunger 36 relative to the atomising plate 44 causes the molten zinc metal 34 to be forced through small orifices as in 45 in the atomising plate 44 thereby forming zinc droplets of molten zinc 46. The molten zinc droplets pass through a particle formation chamber 48 into a cooling chamber 50 where they are cooled in air or another gas, collected, classified and packaged.

Impulse atomisation allows the dimensions of the particles to be accurately controlled using the orifices 45 in the atomisation plate 44, the position of the plunger 36, the frequency and amplitude of the vibrations applied to the plunger 36 and the atmosphere of the formation chamber 48.

On one hand, the length of travel of the plunger 36 (i.e. the amplitude of the vibrations applied to the plunger 36) in large measure dictates the length of segments of molten zinc alloy which are ejected into the formation chamber 48.

On the other hand, selection of an appropriate shape for the orifices 46 also allows for the shape of the particles to be controlled. In the case of elongate segments produced through a round or similar convex polyhedral shaped opening, the elongate segment will be thread-like or acicular. In the case of elongate segments produced through a slit, the elongate segments will be laminar, forming sheets, flat or curved, whose smallest lateral dimension is the thickness of the segment. In the case of more complicated aperture shapes, such as a cross, the smallest lateral dimension will be the thickness of one of the arms of the cross, but the length of the fluid segment may also be several times the width of the arms of the cross.

Additionally, parameters such as rate of cooling can be varied to promote the solidification of the elongated segments of molten zinc alloy solidify prior to their breaking up into spherical droplets. The rate of cooling depends on the surface tension of the zinc alloy, heat transfer from the zinc alloy and the gas through which the zinc alloy passes. For example, an acicular segment will produce an acicular powder if solidified before break up occurs.

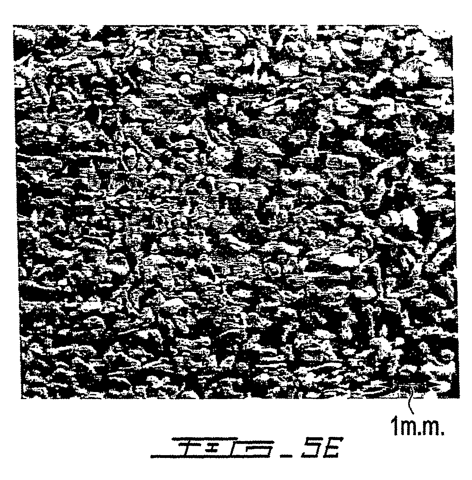

The dimensions of the particles which can be produced using impulse atomisation can typically vary between 10µm and 10mm and is dependent on a number of input control parameters. Referring to Figure 3, the size distribution typically obeys that of a log normal distribution and the slope of the distribution is proportional to the width of the distribution. It is evident from Figure 3 that the width of the particle size distribution for particles formed using impulse atomisation is significantly narrower than the particle size distribution for particles formed using conventional atomisation techniques.

Narrower particle size distribution means that a significantly smaller portion of the produced powders are very fine (for example -325 mesh or smaller) or coarse (for example +40 mesh or greater) which in turn significantly reduces or eliminates the need for screening. As a consequence the amount of powder which is discarded is reduced which in turn improves production yield.

Log-normal slope (σ) of un-classified conventional air atomised zinc powder is typically above 2, more closely 2.4. Un-classified zinc powder produced by impulse atomisation has typically narrow size distribution and a log-normal slope (σ) below 2 and typically below 1.6.

As stated above, typical parameters of the process are the frequency and the force applied to the plunger, the size of the aperture in the atomising plate, the distance between the plunger and the atomising plate and the atmospheric conditions in which the metal droplets are cooled and solidify. By individually varying these parameters different particle shapes, size distributions, and powder densities can be achieved. Table 1, for example, provides examples of typical ranges for these parameters. Table 2 provides examples of how variation in these parameters may affect the powders obtained.

**TABLE 1**

| **Frequency (Hz)** | **Force Applied** (**newtons)** | **Plunger Distance (mm)** | **Atomising Apertures (µm)** | **Atmospheric Conditions** |
|---|---|---|---|---|
| | | | | |
| 20 to 1000 | 44.5 to 400 (10 to 90 lbf) | 1 to 7 | 40 to 500 | 100% Air 100% Nitrogen (or any other inert gas) 100% Oxygen 0 to 20% Oxygen (the remaining being inert gas) |

**TABLE 2**

| **Parameters** | **Impulse Atomisation Conditions** | | |
|---|---|---|---|
| | | | |
| Frequency (Hz) | 40 | 110 | 80 |
| Force applied (newtons) | 133.5 (30 lbf) | 267 (60 lbf) | 245 (55 lbf) |
| Aperture size (µm) | 100 | 150 | 150 |
| Atmosphere | Air | Air | 0.25% O₂ |
| Powder characteristics | Strand | Strand | Spherical |
| Tap Density (g/cc) | 2.4 | 3.03 | 4.2 |

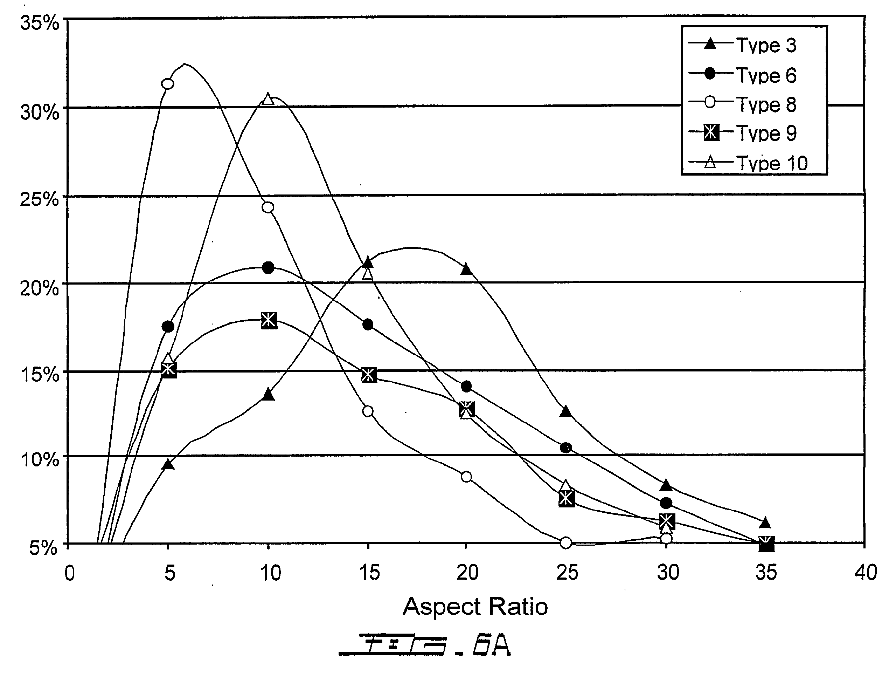

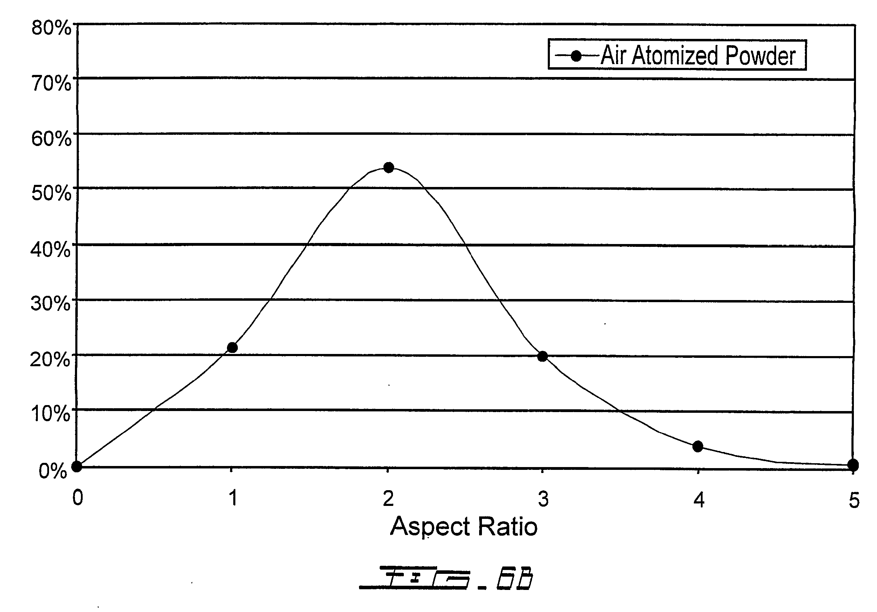

Shapes which can be formed using the impulse atomisation technique include spherical 52 (Figure 5A), oblong 54 (not shown), teardrop as in 56, 58 and 60 (Figures 5B and 5C) and strands 62 (Figure 5D). As confirmed by the samples tabled in Table 3 hereinbelow, these shapes greatly effect the packing and densities of the resulting powder. This is distinct from the shape of particles formed using conventional air atomisation which, referring to the example in Figure 5E, are typically of an irregular shape (bone shape).

The ability to more accurately control the characteristics of the powders provides a greater control over the performance characteristics of the resultant electrochemical cells as measured in terms of discharge rate, gassing, etc.. For example, impulse atomisation allows spherical powders to be obtained where the packing is optimal and the density is very high which in turn provides for an increased connectivity between the metallic particles. On the other hand, by adjusting the conditions under which the droplets of molten zinc metal are formed, impulse atomisation also allows powders comprised of strands (i.e. particles which are acicular, very elongated and having a high aspect ratio) of zinc to be formed. Packing of the strands is achieved by intertwining the strands. This type of intertwining gives rise to a low density powder, while strand-like particles greatly increase the connectivity between particles when compared to spherical particles. Finally, by once again adjusting the conditions under which the droplets of molten zinc metal are formed, it has now been found that teardrop shaped particles with a variety of well-controlled aspect ratios can be formed which provide a favourable combination of both high apparent density and high connectivity, thereby uniting the advantages of both spherical and stranded forms.

In order to determine the densities, a series of test samples were prepared using both impulse atomisation and a conventional air atomisation and the resulting samples tested in regard to their density. The results are Tabled in Table 3.

**TABLE 3**

| **Atomisation process** | **Shape** | **Apparent Density (g/cc)** (ASTM #B212-99) | **Tap Density (g/cc)** (ASTM #B527-93) |
|---|---|---|---|
| Impulse atomisation | Strand very high AR | N/A | 0.63 |
| | Strand high AR | N/A | 1.42 |
| | Strand | 1.82 | 2.02 |
| | Strand | 1.98 | 2.37 |
| | Strand | 2.45 | 2.59 |
| | Strand | 2.76 | 3.02 |
| | Tear drop tailing | 3.20 | 3.27 |
| | Tear drop tailing | 3.55 | 3.18 |
| | Spherical | 4.10 | 4.17 |
| | Spherical | 4.16 | 4.3 |
| Conventional air atomisation | Irregular/Bone shape | 3.03 | 3.40 |

Apparent density is a measure of the free packing of the powder and was measured according to ASTM #B212-99. The apparent density is measured using a hall flowmeter. Note that in order for the hall flowmeter to measure the apparent density the material must flow through an aperture at the lower end of a funnel which forms part of the flowmeter, which the high and very high aspect ratio (AR) strands are unable to do. Tap density, on the other hand, is related to the packed density of the powder and was measured according to ASTM #B527-93.

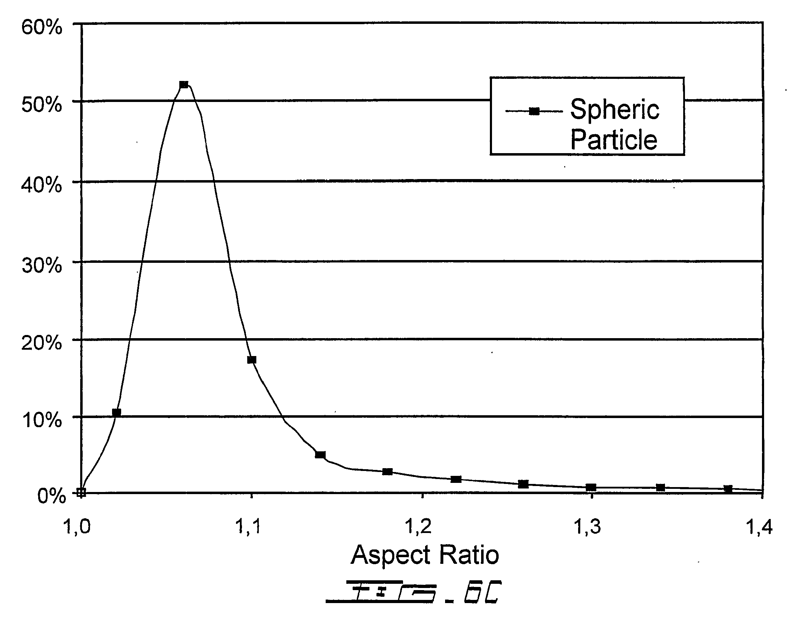

Referring now to Figure 6A, some typical distributions of the aspect ratios of stranded zinc alloy powders produced using impulse atomisation are shown. It is apparent from the graph that some very high aspect ratios are attainable using impulse atomisation. Zinc alloy powders produced using conventional air atomisation, on the other hand, and as graphed in Figure 6B, and generally spherical particles, as graphed in Figure 6C, have a relatively small aspect ratio.

One other benefit of impulse atomisation is that oxidation of the surface is greatly decreased due to the absence of atomising air jets, the corresponding reduction of air-zinc interactions and by the greatly increased rate of cooling. A variety of zinc alloy powders were prepared using impulse atomisation and conventional air atomisation and the amount of surface oxidation measured.
The results are tabled in Table 4.

**TABLE 4**

| **Atomization process** | **Alloy Chemistry (ppm)** | | | | | |
|---|---|---|---|---|---|---|
| | **Al** | **Bi** | **In** | **Pb** | **ZnO (%)** | **ZnO Ratio to Reference** |
| | | | | | | |
| Impulse atomisation process (strand shaped) | 50 | 100 | 200 | | 0.03 | 0.25 |
| | 70 | 100 | 200 | | 0.04 | 0.33 |
| | 60 | 100 | 200 | | 0.03 | 0.25 |
| | 75 | 100 | 200 | | 0.02 | 0.17 |
| Conventional air atomisation | 100 | 100 | 200 | | 0.12 | 1 |
| | | | | | | |
| Impulse atomisation process (strand shaped) | | 300 | 300 | | 0.08 | 0.15 |
| | | 300 | 300 | | 0.16 | 0.30 |
| | | 300 | 300 | | 0.09 | 0.17 |
| Conventional air atomisation | | 300 | 300 | | 0.54 | 1 |
| | | | | | | |
| Impulse atomisation process (strand shaped) | | 500 | 500 | 500 | 0.06 | 0.43 |
| Conventional air atomisation | | 500 | 500 | 500 | 0.14 | 1 |

Note that in the table above the amount of zinc oxide produced is expressed relative to the total amount of zinc atomised. Experimental results show that oxidation is reduced up to 85% relative to that produced during conventional air atomisation. Indeed, when using air atomisation experimental results reveal that a dispersed nano-crystalline surface zinc oxide is formed during the initial stages, immediately after the molten zinc metal is pulverised by the air jets into metal droplets. The kinetics of oxidation are in large part determined by the oxidising conditions occurring around the zinc droplets in the atomisation spray.

The effect of oxidation on melt droplets is easily observed during the manufacture of metal powders from zinc alloyed with aluminum, bismuth and indium (ABI). Experimentation reveals that a significant portion of aluminum is instantaneously dissolved when an ABI powder produced using conventional air atomisation is immersed in alkaline solutions, and this without any significant evolution of hydrogen gas. Typically, 50% of added aluminum is lost during alkaline immersion, but this loss may reach up to 75% for some alloys containing about 200 ppm of aluminum, or depending upon atomisation parameters such as high melt or atomising air temperature. The effective aluminum concentration in zinc particles is therefore much lower.

Zinc alloying with some aluminum improves gassing, especially gassing after partial discharge. This effect is associated with the presence of aluminum in a metallic form, the amount of which is reduced when aluminum is oxidised.

It is apparent that a strong force is acting on the aluminum, aluminum oxidation. Therefore it seems likely that aluminum is reacting and accumulating on the droplet surface as an oxide according to this mechanism:
- Fast aluminum oxidation occurs near the surface of zinc alloy droplet immediately following formation;
- aluminum diffuses from bulk to the droplet's surface prior to particle solidification; and
- further aluminum oxidation occurs until solidification is completed.

A controlled oxidation rate of the zinc droplets is demonstrated by the absence of dispersed nano-crystalline surface ZnO and by a significant drop in alkaline aluminum loss from the ABI alloy.

A series of samples of zinc alloy containing aluminum were prepared and zinc alloy powders formed using impulse atomisation and conventional air atomisation techniques. The powders were then immersed in a KOH electrolyte and the remaining Al then measured. The results are tabled in Table 5.

**TABLE 5**

| **Atomisation process** | **Aluminium Content (ppm)** | | |
|---|---|---|---|
| | **Alloyed Al** | **Al Remaining After Immersion in KOH** | **Aluminium Ratio** |
| Impulse atomisation | 125 | 119 | 95% |
| | 59 | 51 | 86% |
| Conventional - air atomisation | 109 | 54 | 49% |

It is apparent from the above results that the amount of aluminum lost to oxidation can be significantly reduced through the use impulse atomisation. It therefore follows that the use of impulse atomisation can also reduce zinc powder gassing significantly. The decrease in gassing rate is intimately associated with the alloying components, the atomisation conditions, the control of oxidation and environment during particle formation and the cooling rate of the particles.

In order to analyse the effects of impulse atomisation on gassing a series of samples of zinc alloy were prepared. These alloys were then used to fabricate powders using both the impulse atomisation techniques and conventional air atomisation techniques. The powders were then dispersed in a gelled KOH electrolyte and the gassing measured. The results are tabled in Table 6.

**TABLE 6**

| **Atomisation process** | **Alloy Chemistry (ppm)** | | | | **Anode Mix Gassing (µl/g-d)** | |
|---|---|---|---|---|---|---|
| | **Bi** | **In** | **Al** | **Pb** | **Fresh Anode Mix** | **Partially Discharged Anode Mix** |
| | | | | | | |
| Impulse atomisation process | 300 | 300 | | | 7.1 | 42 |
| | 300 | 300 | | | 4.2 | 37 |
| Typical air atomisation | 300 | 300 | | | 10 | 105 |
| | | | | | | |
| Impulse atomisation process | 100 | 200 | 100 | | 1.4 | 41 |
| | 100 | 200 | 100 | | 5.6 | 32 |
| Typical air atomisation | 100 | 200 | 100 | | 6.0 | 30 |
| | | | | | | |
| Impulse atomisation process | 100 | | | | 13.2 | 112 |
| Typical air atomisation | 100 | | | | 138 | 197 |
| | | | | | | |
| Impulse atomisation process | 500 | 500 | | 500 | 9.6 | 20 |
| Typical air atomisation | 500 | 500 | | 500 | 4.8 | 77 |

Note that the unit µl/g-d indicates the amount of hydrogen gas generated in micro litres per gram of zinc evolving from the anode per day. Additionally, the fresh anode mix gassing is a measure of the hydrogen gas produced by fresh zinc within the anode kept at 71°C for 24 hours, whereas partially discharged anode mix gassing is a measure of the hydrogen gas evolving from the residual mixture within the anode once the fresh zinc has been partially discharged and subsequently kept at 71°C for 24 hours.

It is apparent from the above results that the gassing rates of anodes, or negative electrodes, fabricated from powdered zinc and an alkaline electrolyte such as potassium hydroxide (KOH), zinc oxide (ZnO) and a gelling agent are significantly reduced through impulse atomisation. For example, fabrication of zinc alloy particles using impulse atomisation and zinc alloyed with either bismuth, bismuth-indium, bismuth-indium-aluminium, or bismuth-indium-lead provided for reduced gassing rates significantly over powders fabricated using conventional air atomisation techniques.

In order to test performance a series of LR-06 test cells and LR-06 reference cells were assembled. All test cells and reference cells were assembled using identical manganese dioxide cathodes, current collectors and casings.

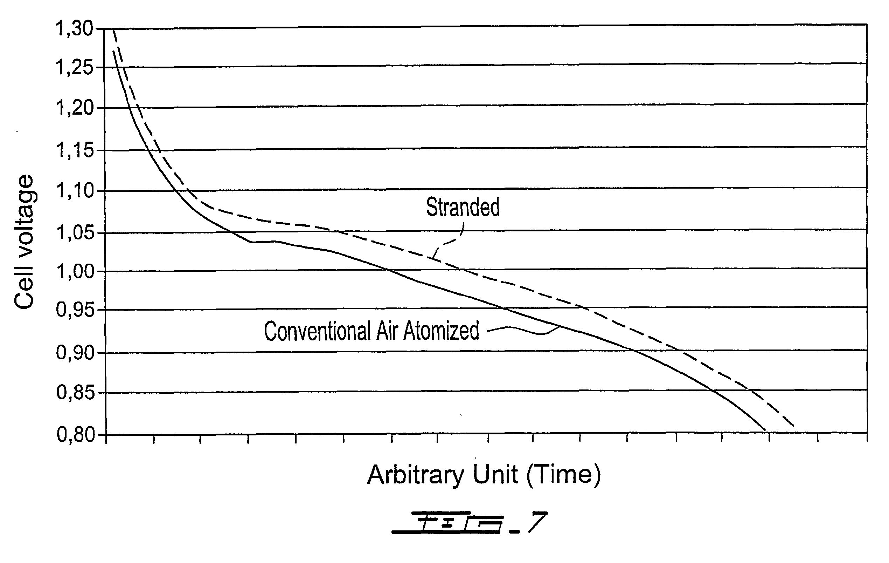

Anodes fabricated with a zinc alloy powder comprised of 100% zinc strands revealed significantly improved performance characteristics. Figure 7 shows under a sustained load of 1 ohm the discharge voltage remains significantly higher for batteries having anodes or negative electrodes constructed using zinc alloys powders fabricated using impulse atomisation relative to the reference cells having anodes constructed of powders formed using conventional air atomisation. This is of course a benefit, in that many devices which operate such load conditions will indicate that the power source is depleted if the voltage drops below a threshold value.

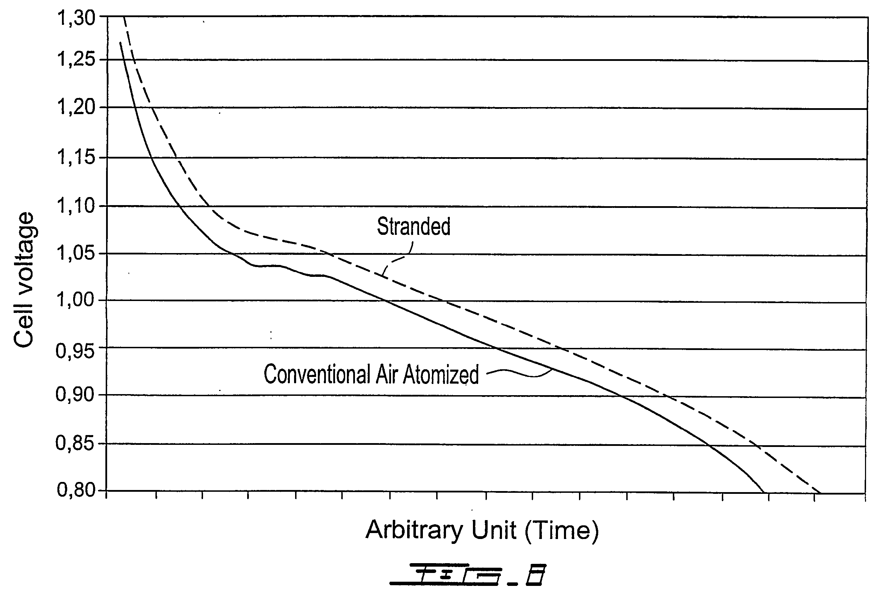

Additionally, anodes fabricated with a zinc alloy powder comprised of 100% zinc strands revealed significantly improved performance characteristics. For example, referring to Figure 8, in comparative tests with reference batteries having anodes comprised of zinc powders fabricated using conventional air atomisation techniques, reduction of the amount of zinc by weight used to fabricate the anodes or negative electrodes of an alkaline cell from 67% to 62% was achieved while using a powder comprised of zinc strands fabricated using impulse atomisation. The high rate performance with a load of 1 ohm also improved up to 20% when compared with the reference batteries.

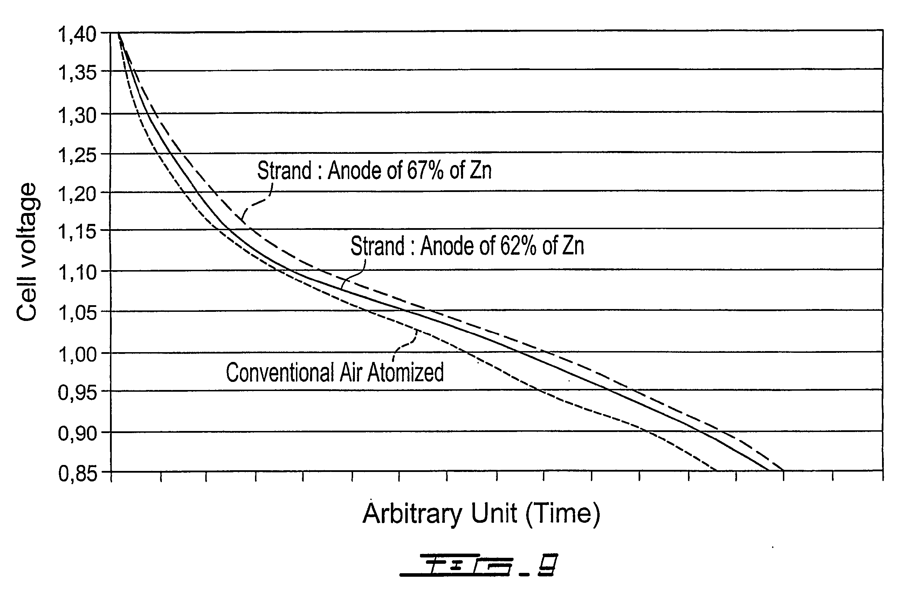

Furthermore, Figure 9 shows that under high current drain conditions (i.e. a sustained current drain of 1 ampere) with varying amounts of zinc by weight in the cells (67% and 62%), the discharge voltage remains significantly higher for batteries having anodes or negative electrodes constructed using zinc alloy powders such as ABI fabricated according to impulse atomisation relative to the reference batteries.

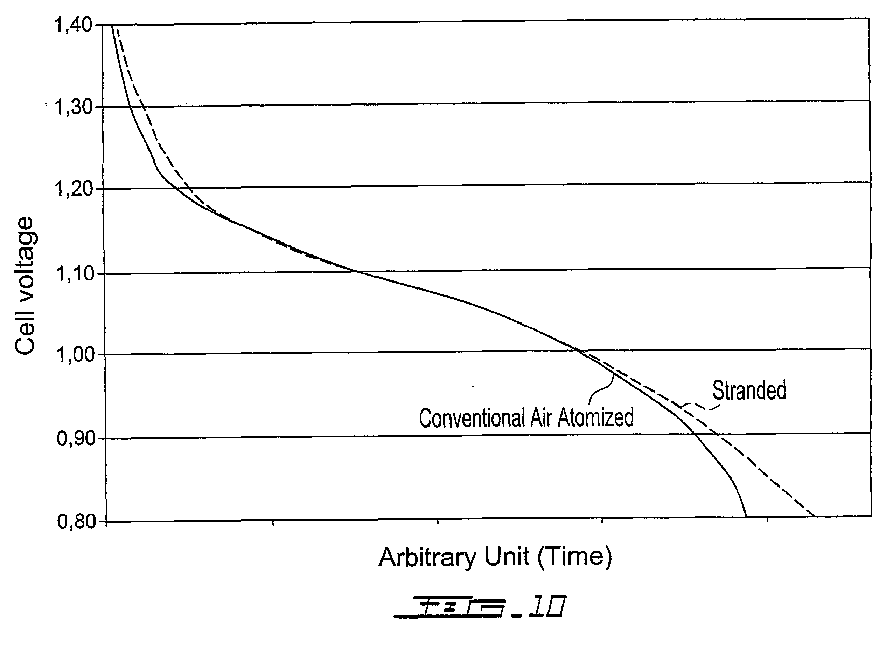

Finally, reduction in the amount of zinc by weight in the anode of an alkaline battery by approximately 10% (from 67% to 62%) while using zinc strands having large aspect ratio fabricated using impulse atomisation revealed that, during low rate conditions (i.e. under a continuous load of 3.9 ohms), the capacity of the cell was increased by approximately 5% over that of the reference batteries having anodes comprised of 67% by weight conventional air atomised zinc powders. The results for a low rate discharge are provided in Figure 10.

In order to test the actual discharge rates of zinc powder anodes, two LR-06 cells were assembled: the first LR-06 having an anode from zinc powder fabricated using conventional air atomisation; and the second having an anode from a stranded zinc powder fabricated using impulse atomisation. The LR-06 cells were otherwise the same using the same magnesium dioxide cathode, separator, current collector and casing. Additionally, the anode included a zinc powder suspended in a gelled electrolyte comprising 98% by weight of KOH 40%/ZnO 3% and 2% by weight of polyacrylic acid (Carbopol^{™} 940) as gelling agent.

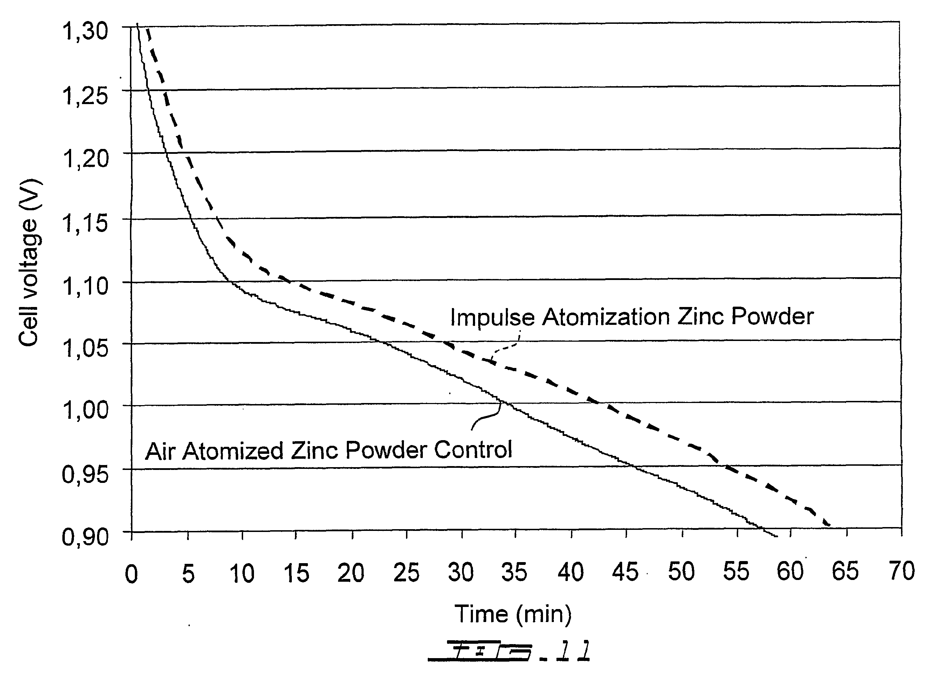

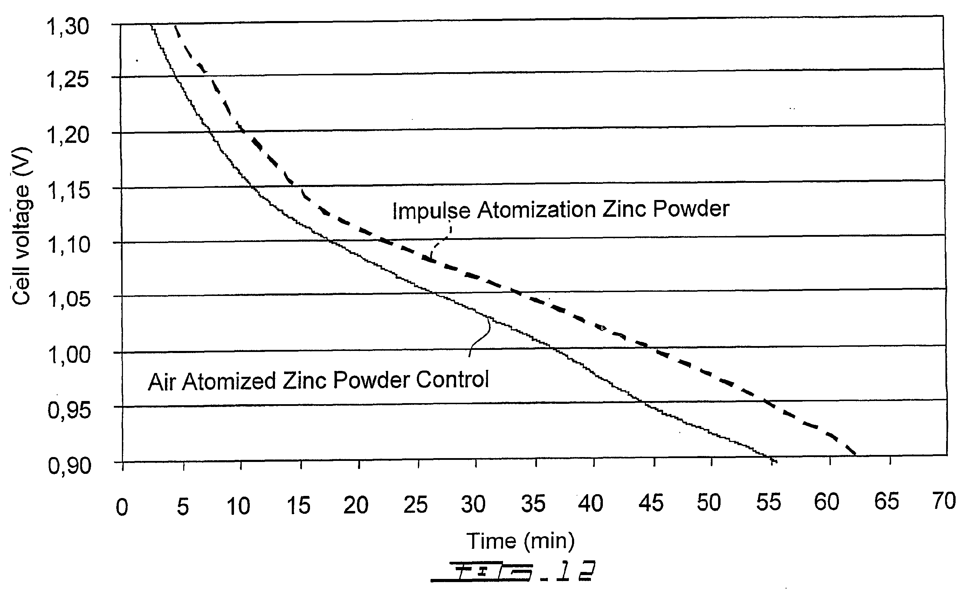

In order to test cell performance under constant continuous load, a load of 1 ohm was placed between the positive and negative terminals of the cells and the fluctuation in cell voltage measured over time. The results are graphed in Figure 11. Similarly, in order to test the cell performance under constant continuous current, a continuous current of 1 ampere was drawn from the cell. The results are graphed in Figure 12.

It will now be apparent to one of ordinary skill in the art that electrochemical cells with anodes fabricated from stranded powders exhibit superior performance characteristics over those fabricated using conventional air atomised powders. In particular, the 1.0V cut-off, which is typically used as an indicator to the electronics being supplied by the cell that the cell is depleted, was increased to 42 minutes from 34 minutes under the 1.0 ohm load (see Figure 11) and to 45 minutes from 36 minutes given load conditions drawing a continuous current of 1 ampere (see Figure 12).

A melt of zinc alloy was prepared by melting electrolytic 99.995% zinc metal. Pure zinc and a variety of zinc alloys, including zinc-bismuth (B alloy), zinc-bismuth-indium (Bl alloy), zinc-aluminum-bismuth-indium (ABI alloy), zinc-bismuth-indium-calcium (BIC alloy) and zinc-bismuth-indium-lead (BIP alloy) were prepared and then atomised using both conventional air-atomisation techniques and impulse atomisation. Following atomisation the zinc metal powders were classified and tested.

A series of LR-06 cells were fabricated from powders derived from both the impulse atomisation process and conventional air atomisation process. The zinc anodes were fabricated from a zinc powder blended with a gelled electrolyte. The gelled electrolyte comprised 98% by weight of KOH 40%/ZnO 3% and 2% by weight of polyacrylic acid (Carbopol^{™} 940) as gelling agent.

Two varieties of gelled anodes were fabricated, the first comprising 67% by weight zinc powder and 33% by weight gelled electrolyte and the second comprising 62% by weight zinc powder and 38% by weight gelled electrolyte. The control anode was fabricated from 67% by weight zinc powder and 33% by weight of gelled electrolyte. Once the mix of zinc and gelled electrolyte was homogeneous, the resulting paste was inserted in LR06 alkaline cell to form the anode. Referring back to Figure 1, the manner in which those cells were constructed is shown.

The zinc alloy powders were characterised and evaluated in terms LR06-cell performance at different zinc loads and the results tabled in Table 7 and Table 8. Note that the D50 column indicates the value below which 50% of the particles of zinc alloy powder produced were found. D50 was measured according to ASTM #214-99. Tap density, on the other hand, as stated above in reference to Table 4, is related to the packed density of the powder and was measured according to ASTM #B527-93.

**TABLE 7**

| **Powder** | **Particle Characteristics** | | | | |
|---|---|---|---|---|---|
| | **Image Analysis** | | | **PSD (ASTM #214-99)** | **Density (ASTM #B527-93)** |
| | **Average Aspect Ratio** | **Average Width (µm)** | **Average Length (µm)** | **D50 (µm)** | **Tap Density** |
| | | | | | |
| Type 1 | 10 | 166 | 1605 | 530 | 3.1 |
| Type 2 | 11 | 207 | 2060 | 340 | 2.8 |
| Type 3 | 20 | 101 | 1771 | 360 | 2.5 |
| Type 4 | 14 | 134 | 1625 | 355 | 3.1 |
| Type 5 | 18 | 160 | 2053 | 405 | 2.7 |
| Type 6 | 20 | 96 | 1622 | 315 | 2.3 |
| Type 7 | 21 | 125 | 1925 | 340 | 2.4 |
| Type 8 | 22 | 93 | 1508 | 280 | 2.4 |
| Type 9 | 23 | 106 | 1900 | 420 | 2.3 |
| Type 10 | 20 | 105 | 1880 | 290 | 2.4 |
| Type 11 | 18 | 91 | 1446 | 300 | 2.6 |
| Type 12 | 19 | 87 | 1471 | 320 | 2.6 |
| Type 13 | 21 | 84 | 1545 | 400 | 2.3 |
| Reference | 2 | 151 | 292 | 150 | 3.4 |

**TABLE 8**

| | **Alloy Chemistry (ppm)** | | | | | **LR06 to 1.0V Cut-Off vs. Reference (%)** | | | |
|---|---|---|---|---|---|---|---|---|---|
| | **Bi** | **In** | **Al** | **Pb** | **Ca** | **1000 mA** | | **1 ohm** | |
| | | | | | | **62% Zn** | **67% Zn** | **62% Zn** | **67% Zn** |
| Type 1 | 300 | 300 | | | | 95 | 96 | 97 | 99 |
| Type 2 | 300 | 300 | | | | 103 | 100 | 91 | 101 |
| Type 3 | 300 | 300 | | | | 101 | 101 | 100 | 102 |
| Type 4 | 300 | 300 | | | | 101 | 104 | 96 | 96 |
| Type 5 | 300 | 300 | | | | 92 | 98 | 100 | 99 |
| Type 6 | 300 | 300 | | | | 107 | 113 | 107 | 114 |
| Type 7 | 300 | 300 | | | | 107 | 107 | 107 | 107 |
| Type 8 | 300 | 300 | | | | 121 | 120 | 106 | 110 |
| Type 9 | 100 | 200 | 100 | | | 106 | 115 | 123 | 125 |
| Type 10 | 100 | 200 | 100 | | | 122 | 115 | 128 | 126 |
| Type 11 | 100 | | | | | 97 | 98 | 100 | 94 |
| Type 12 | 500 | 500 | | 500 | | 88 | 90 | 96 | 100 |
| Type 13 | 250 | 250 | | | 150 | 108 | 115 | 110 | 114 |
| Reference | 100 | 200 | 100 | | | 100 | 100 | 100 | 100 |

Additionally, improved performance characteristics may also be derived from mixtures of the above produced zinc alloy powders. A given mixture is comprised of two or more types of zinc powders made by impulse atomisation or by impulse atomisation and conventional techniques and having different particle shapes and/or particle sizes distributed around different mean particle sizes which are then combined to form a hybrid powder. By adjusting the powder mix in terms of both particle size and shape the performance characteristics of a given electrochemical cell can be optimised.

Referring now to Table 9, powder fabricated using impulse atomisation was mixed with fine air atomised powder or conventional air atomised powder and tests performed in LR06 cells under two different regimes. The fine air atomised powder has a particle size distribution were 100% of the particles are less than 75 µm and the conventional air atomised powder has a particle size distribution within 425 µm and 54 µm.

**TABLE 9**

| **Powder** | **Air Atomised Powder Added** | | **LR06 to 1.0V Cut-Off vs. Reference** | | |
|---|---|---|---|---|---|
| | **Fine Powder** | **Conventional Powder** | **1.5 W** | **1A** | **1W Intermittent** |
| | | | | | |
| Type 6 | - | - | 109% | 113% | 109% |
| | 20% | - | 114% | 103% | |
| | 50% | - | 130% | 107% | |
| | - | 20% | | 102% | 100% |
| | - | 50% | | 99% | 97% |
| | | | | | |
| Type 10 | - | - | 109% | 115% | 115% |
| | 20% | - | 131% | 109% | |
| | 50% | - | 116% | 98% | |
| | - | 20% | | 116%. | 119% |
| | - | 50% | | 107% | 118% |
| | | | | | |
| Reference | - | - | 100% | 100% | 100% |

Furthermore, improved performance characteristics may also be achieve from derived formulations of the anode mix varying the concentration of gelling agent for instance. A stranded zinc powder was mixed with an electrolyte comprising varying amounts of the polyacrylic gelling agent Carbopol™ 940. The results are tabled in Table 10.

**TABLE 10**

| **Powder** | **Chemistry (ppm)** | | **Carbopol^{™} (%)** | **LR06 to 1.0V Cut-Off vs. Reference** |
|---|---|---|---|---|
| | | | | |
| | Bi | In | | 1A |
| | | | | |
| Type 7 | 300 | 300 | 0.60% | 107% |
| | | | 0.30% | 106% |
| | | | 0.15% | 112% |

## Claims

1. A method for fabricating a powder for use in an anode of an electrochemical cell, the method comprising the steps of:
(a) providing a molten zinc alloy;
(b) atomising said molten zinc alloy by impulse atomisation to produce zinc alloy particles;
(c) recovering said particles, wherein said recovered particles have a particle size distribution having a log normal distribution slope of less than 2, preferably less than 1.6, exhibit an average aspect ratio of between 8 and 22 and wherein a major portion of said recovered particles are of a teardrop, acicular or stranded shape; and
(d) fabricating an anode from said recovered particles, wherein the recovered particles are suspended in a fluid medium.

2. The method of claim 1, wherein said impulse atomisation has a frequency of between 20 and 1000Hz, a force applied to the plunger of between 44.5 and 40 newtons, a plunger distance of between 1 to 7 mm and atomising apertures of between 40 and 500µm.

3. The method of claim 1 or 2, wherein said atomising step further comprises cooling said particles in an atmosphere comprising a gas selected from the group consisting of air, inert gas, oxygen and a mixture of 0 to 20% oxygen with the remainder being inert gas.

4. The method of claim 3, wherein said inert gas is selected from the group consisting of nitrogen, helium, argon and any mix of nitrogen, helium and argon.

5. The method of claim 1, wherein a major portion of said recovered particles are teardrop.

6. The method of claim 1, wherein a major portion of said recovered particles are acicular or stranded.

7. Use of zinc alloy particles having a particle size distribution with a log normal slope of less than 2, preferably less than 1.6 and an average aspect ratio of between 8 and 22 wherein a major portion of said zinc alloy particles are of a teardrop, acicular or stranded shape in method for fabricating an anode of an electrochemical cell, wherein the zinc alloy particles are suspended in a fluid medium.

8. The use of claim 7, wherein said zinc alloy is comprised of pure zinc alloyed with bismuth and indium.

9. The use of claim 7, wherein said zinc alloy particles have an average length between 100µm and 3000µm, preferably between 500µm and 2000µm.

10. The use of claim 7. wherein said zinc alloy particles have an average width between 40µm and 1000µm, preferably between 40µm and 200µm.

11. The use of claims 7 to 10, further comprising up to 50% and preferably up to 20% of a second zinc metal or zinc alloy powder having an average aspect ratio of 2 and an average particle size of between 54µm and 425µm.

12. The use of claims 7 to 10, further comprising up to 50% and preferably up to 20% of a second zinc metal powder having an average particle size of less than 75µm.

13. The use as in claim 11 or 12, wherein said particles and said second powder are formed from the same zinc alloy in terms of alloying elements and amounts of said alloying elements.

14. The use of claim 8, wherein said zinc alloy comprises between 50 to 1000 ppm bismuth, preferably between 100 to 500 ppm, bismuth.

15. The use of claim 8, wherein said zinc alloy comprises between 50 to 1000 ppm indium, preferably between 100 to 500 ppm, indium.

16. The use of claim 8, wherein said zinc alloy further comprises aluminum.

17. The use of claim 16, wherein said zinc alloy further comprises between 20 to 1000ppm aluminum, preferably between 50 to 200ppm, aluminum.

18. The use of claims 8 to 17, wherein said zinc alloy further comprises calcium.

19. The use of claim 18, wherein said zinc alloy further comprises between 20 to 1000ppm calcium, preferably between 50 to 200ppm, calcium.

20. The use of claims 8 to 17, wherein said zinc alloy further comprises lead.

21. The use of claim 20, wherein said zinc alloy further comprises between 50 to 1000ppm lead, preferably between 50 to 500ppm, lead.

22. The method of claims 1 to 6, wherein said fluid medium is a gelled KOH electrolyte.

23. The method of claim 22, wherein said gelled KOH electrolyte comprises 98°/o by weight of KOH 40%/ZnO 3% and 2% by weight of a gelling agent.

24. The method of claim 23, wherein said gelling agent is polyacrylic acid.

25. The method of claim 24, wherein said polyacrylic acid is Carbopol™ 940.

26. The use of claims 7 to 21, wherein said fluid medium is a gelled KOH electrolyte.

27. The use of claim 26, wherein said gelled KOH electrolyte comprises 98% by weight of KOH 40%/ZnO 3% and 2% by weight of a gelling agent.

28. The use of claim 27, wherein said gelling agent is polyacrylic acid.

29. The use of claim 28, wherein said polyacrylic acid is Carbopol™ 940.

## Patentansprüche

1. Verfahren zur Herstellung eines Pulvers zur Verwendung in einer Anode einer elektrochemischen Zelle, wobei das Verfahren die Stufen:
(a) Bereitstellen einer Zinklegierungsschmelze;
(b) Zerstäuben der Zinklegierungsschmelze durch Impulszerstäubung zur Bildung von Zinklegierungsteilchen;
(c) Gewinnen der Teilchen, wobei die gewonnenen Teilchen eine Teilchengrößenverteilung mit einer Steigung der logarithmischen Normalverteilung von weniger als 2, vorzugsweise weniger als 1,6 aufweisen, ein durchschnittliches Seitenverhältnis zwischen 8 und 22 zeigen und wobei der Hauptteil der gewonnenen Teilchen von tropfenförmiger, nadelförmiger oder fadenförmiger Gestalt ist; und
(d) Herstellen einer Anode aus den gewonnenen Teilchen, wobei die gewonnenen Teilchen in einem fluiden Medium suspendiert werden, umfasst.

2. Verfahren nach Anspruch 1, wobei die Impulszerstäubung die Merkmale einer Frequenz von zwischen 20 und 1000 Hz, einer auf den Kolben ausgeübten Kraft von zwischen 44,5 und 40 Newton, eines Kolbenabstands von zwischen 1 und 7 mm und von Zerstäubungsöffnungen von zwischen 40 und 500 µm aufweist.

3. Verfahren nach Anspruch 1 oder 2, wobei die Zerstäubungsstufe ferner das Kühlen der Teilchen in einer Atmosphäre, die ein Gas umfasst, das aus der Gruppe von Luft, einem Inertgas, Sauerstoff und einem Gemisch von 0 bis 20 % Sauerstoff und dem Rest aus einem Inertgas ausgewählt ist, umfasst.

4. Verfahren nach Anspruch 3, wobei das Inertgas aus der Gruppe von Stickstoff, Helium, Argon und einem beliebigen Gemisch von Stickstoff, Helium und Argon ausgewählt ist.

5. Verfahren nach Anspruch 1, wobei der Hauptteil der gewonnenen Teilchen tropfenförmige Teilchen sind.

6. Verfahren nach Anspruch 1, wobei der Hauptteil der gewonnenen Teilchen nadelförmige oder fadenförmige Teilchen sind.

7. Verwendung von Zinklegierungsteilchen, die eine Teilchengrößenverteilung mit einer Steigung der logarithmischen Normalverteilung von weniger als 2, vorzugsweise weniger als 1,6 und ein durchschnittliches Seitenverhältnis von zwischen 8 und 22 aufweisen, wobei der Hauptteil der Zinklegierungsteilchen von tropfenförmiger, nadelförmiger oder fadenförmiger Gestalt ist, bei einem Verfahren zur Herstellung einer Anode einer elektrochemischen Zelle, wobei die Zinklegierungsteilchen in einem fluiden Medium suspendiert werden.

8. Verwendung nach Anspruch 7, wobei die Zinklegierung aus mit Bismut und Indium legiertem reinem Zink besteht.

9. Verwendung nach Anspruch 7, wobei die Zinklegierungsteilchen eine durchschnittliche Länge zwischen 100 *µ*m und 3000 *µ*m, vorzugsweise zwischen 500 *µ*m und 2000 *µ*m aufweisen.

10. Verwendung nach Anspruch 7, wobei die Zinklegierungsteilchen eine durchschnittliche Breite zwischen 40 µm und 1000 µm, vorzugsweise zwischen 40 µm und 200 µm aufweisen.

11. Verwendung nach den Ansprüchen 7 bis 10, wobei ferner bis zu 50 % und vorzugsweise bis zu 20 % an einem zweiten Zinkmetall- oder Zinklegierungspulver mit einem durchschnittlichen Seitenverhältnis von 2 und einer durchschnittlichen Teilchengröße von zwischen 54 µm und 425 µm enthalten sind.

12. Verwendung nach den Ansprüchen 7 bis 10, wobei ferner bis zu 50 % und vorzugsweise bis zu 20 % an einem zweiten Zinkmetallpulver mit einer durchschnittlichen Teilchengröße von weniger als 75 µm enthalten sind.

13. Verwendung nach Anspruch 11 oder 12, wobei die Teilchen und das zweite Pulver aus der gleichen Zinklegierung in Bezug auf Legierungselemente und Mengen der Legierungselemente gebildet werden.

14. Verwendung nach Anspruch 8, wobei die Zinklegierung zwischen 50 und 1000 ppm Bismut, vorzugsweise zwischen 100 und 500 ppm Bismut umfasst.

15. Verwendung nach Anspruch 8, wobei die Zinklegierung zwischen 50 und 1000 ppm Indium, vorzugsweise zwischen 100 und 500 ppm Indium umfasst.

16. Verwendung nach Anspruch 8, wobei die Zinklegierung ferner Aluminium umfasst.

17. Verwendung nach Anspruch 16, wobei die Zinklegierung ferner zwischen 20 und 1000 ppm Aluminium, vorzugsweise zwischen 50 und 200 ppm Aluminium umfasst.

18. Verwendung nach den Ansprüchen 8 bis 17, wobei die Zinklegierung ferner Calcium umfasst.

19. Verwendung nach Anspruch 18, wobei die Zinklegierung ferner zwischen 20 und 1000 ppm Calcium, vorzugsweise zwischen 50 und 200 ppm Calcium umfasst.

20. Verwendung nach den Ansprüchen 8 bis 17, wobei die Zinklegierung ferner Blei umfasst.

21. Verwendung nach Anspruch 20, wobei die Zinklegierung ferner zwischen 50 und 1000 ppm Blei, vorzugsweise zwischen 50 und 500 ppm Blei umfasst.

22. Verfahren nach den Ansprüchen 1 bis 6, wobei das fluide Medium ein gelierter KOH-Elektrolyt ist.

23. Verfahren nach Anspruch 22, wobei der gelierte KOH-Elektrolyt 98 Gew.-% an KOH 40 %/ZnO 3 % und 2 Gew.-% an einem Geliermittel umfasst.

24. Verfahren nach Anspruch 23, wobei das Geliermittel Polyacrylsäure ist.

25. Verfahren nach Anspruch 24, wobei die Polyacrylsäure Carbopol^{™} 940 ist.

26. Verwendung nach den Ansprüchen 7 bis 21, wobei das fluide Medium ein gelierter KOH-Elektrolyt ist.

27. Verwendung nach Anspruch 26, wobei der gelierte KOH-Elektrolyt 98 Gew.-% an KOH 40 %/ZnO 3 % und 2 Gew.-% an einem Geliermittel umfasst.

28. Verwendung nach Anspruch 27, wobei das Geliermittel Polyacrylsäure ist.

29. Verwendung nach Anspruch 28, wobei die Polyacrylsäure Carbopol^{™} 940 ist.

## Revendications

1. Procédé de fabrication d'une poudre destinée à être utilisée dans une anode d'un élément électrochimique, le procédé comprenant les étapes consistant à :
(a) fournir un alliage de zinc fondu;
(b) atomiser ledit alliage de zinc fondu par atomisation à impulsions pour produire des particules d'alliage de zinc ;
(c) récupérer lesdites particules, dans lequel lesdites particules récupérées ont une distribution de taille de particule ayant une pente de distribution log normale inférieure à 2, de préférence inférieure à 1,6, présentent un rapport d'aspect moyen compris entre 8 et 22 et dans lequel une partie majoritaire desdites particules récupérées ont une forme de larme, aciculaire, ou de fil ; et
(d) fabriquer une anode à partir desdites particules récupérées, dans lequel les particules récupérées sont mises en suspension dans un milieu fluide.

2. Procédé selon la revendication 1, dans lequel l'atomisation à impulsions a une fréquence comprise entre 20 et 1000 Hz, une force appliquée au plongeur comprise entre 44,5 et 40 newtons, une distance de plongeur comprise entre 1 à 7 mm et des ouvertures d'atomisation comprises entre 40 et 500 µm,.

3. Procédé selon la revendication 1 ou 2, dans lequel ladite étape d'atomisation comprend en outre le refroidissement desdites particules dans une atmosphère comprenant un gaz choisi dans le groupe constitué par l'air, un gaz inerte, l'oxygène et un mélange de 0 à 20% d'oxygène avec le reste étant un gaz inerte.

4. Procédé la revendication 3, dans lequel ledit gaz inerte est choisi dans le groupe constitué par l'azote, l'hélium, l'argon, et un mélange quelconque d'azote, d'hélium et d'argon.

5. Procédé selon la revendication 1, dans lequel une partie majoritaire desdites particules récupérées dont des larmes.

6. Procédé selon la revendication 1, dans lequel une partie majoritaire desdites particules récupérées est aciculaire ou en fil.

7. Utilisation de particules d'alliage de zinc ayant une distribution de taille de particule avec une pente log normale inférieure à 2, de préférence inférieure à 1,6 et un rapport d'aspect moyen compris entre 8 et 22 dans laquelle une partie majoritaire desdites particules d'alliage de zinc a une forme de larme, aciculaire ou de fil dans un procédé de fabrication d'une anode d'un élément électrochimique, dans laquelle les particules d'alliage de zinc sont mises en suspension dans un milieu fluide.

8. Utilisation selon la revendication 7, dans laquelle ledit alliage de zinc est constitué de zinc pur allié à du bismuth et de l'indium.

9. Utilisation selon la revendication 7, dans laquelle lesdites particules d'alliage de zinc ont une longueur moyenne comprise entre 100 µm et 3000 µm, de préférence entre 500 µm et 2000 µm.

10. Utilisation selon la revendication 7, dans laquelle lesdites particules d'alliage de zinc ont une largeur moyenne comprise entre 40 µm et 1000 µm, de préférence entre 40 µm et 200 µm.

11. Utilisation selon les revendications 7 à 10, comprenant en outre jusqu'à 50% et de préférence jusqu'à 20% d'une seconde poudre de zinc métal ou d'alliage de zinc ayant un rapport d'aspect moyen de 2 et une taille de particule moyenne comprise entre 54 µm et 425 µm.

12. Utilisation selon les revendications 7 à 10, comprenant en outre jusqu'à 50% et de préférence jusqu'à 20% d'une seconde poudre de zinc métal ayant une taille moyenne de particule inférieure à 75 µm.

13. Utilisation selon la revendication 11 ou la revendication 12, dans laquelle lesdites particules et ladite seconde poudre sont formées à partir du même alliage de zinc en termes des éléments d'alliage et des quantités desdits éléments d'alliage.

14. Utilisation selon la revendication 8, dans laquelle ledit alliage de zinc comprend entre 50 et 1000 ppm de bismuth, de préférence entre 100 et 500 ppm, de bismuth.

15. Utilisation selon la revendication 8, dans laquelle ledit alliage de zinc comprend entre 50 et 1000 ppm d'indium, de préférence entre 100 et 500 ppm, d'indium.

16. Utilisation selon la revendication 8, dans laquelle ledit alliage de zinc comprend en outre de l'aluminium.

17. Utilisation selon la revendication 16, dans laquelle ledit alliage de zinc comprend en outre entre 20 à 1000 ppm d'aluminium, de préférence entre 50 à 200 ppm, d'aluminium.

18. Utilisation selon les revendications 8 à 17, dans laquelle ledit alliage de zinc comprend en outre du calcium.

19. Utilisation selon la revendication 18, dans laquelle ledit alliage de zinc comprend en outre entre 20 et 1000 ppm de calcium, de préférence entre 50 et 200 ppm, de calcium.

20. Utilisation selon les revendications 8 à 17, dans laquelle ledit alliage de zinc comprend en outre du plomb.

21. Utilisation selon la revendication 20, dans laquelle ledit alliage de zinc comprend en outre entre 50 et 1000 ppm de plomb, de préférence entre 50 et 500 ppm, de plomb.

22. Procédé selon les revendications 1 à 6, dans lequel ledit milieu fluide est un électrolyte KOH gélifié.

23. Procédé selon la revendication 22, dans lequel ledit électrolyte KOH gélifié comprend 98% en poids de KOH 40%/ZnO 3% et 2% en poids d'un agent gélifiant.

24. Procédé selon la revendication 23, dans lequel ledit agent gélifiant est l'acide polyacrylique.

25. Procédé selon la revendication 24, dans lequel ledit acide polyacrylique est le Carbopol^{™} 940.

26. Utilisation selon les revendications 7 à 21, dans laquelle ledit milieu fluide est un électrolyte KOH gélifié.

27. Utilisation selon la revendication 26, dans laquelle ledit électrolyte KOH gélifié comprend 98% en poids de KOH 40%/ZnO 3% et 2% en poids d'agent gélifiant.

28. Utilisation selon la revendication 27, dans laquelle ledit agent gélifiant est l'acide polyacrylique.

29. Utilisation selon la revendication 28, dans laquelle ledit acide polyacrylique est le Carbopol^{™} 940.
